# EUROPEAN PATENT SPECIFICATION

(11) **EP 4 431 376 B1**
(45) Date of publication and mention of the grant of the patent: **04.06.2025**
(21) Application number: 23213491.6
(22) Date of filing: 30.11.2023
(51) Int. Cl.: B62J 7/04, B60R 9/00

(54) **RACK-CARRYING DEVICE**
VORRICHTUNG ZUM TRAGEN VON REGALEN
DISPOSITIF PORTE-GAGE

(30) Priority: 17.03.2023 TW 112110087
(43) Date of publication of application: 18.09.2024
(73) Proprietor: Sunny Wheel Industrial Co., Ltd., Chang Hua Hsien 50442 (TW)
(72) Inventor: HSU, Kuo-Chung, 50442 CHANG HUA HSIEN (TW)
(74) Representative: DREISS Patentanwälte PartG mbB

(56) References cited:
- WO-A1-2018/203743
- US-A1- 2008 073 396
- US-A1- 2012 205 411
- US-A1- 2020 231 239

## Description

The disclosure relates to a carrying device, and more particularly to a quick release rack-carrying device.

A conventional bicycle cargo rack device disclosed in Taiwanese Patent No. M595076 includes a cargo carrier seat that is used for carrying a cargo, a supporting rack that is located under the cargo carrier seat and that is mounted to a bicycle, and a plurality of screws that fixedly fasten the cargo carrier to the supporting rack so that the cargo carrier is not movable relative to the supporting rack.

However, the cargo carrier seat may not be able to be fastened to another supporting rack that is different from the supporting rack of the conventional bicycle cargo rack in terms of sizes. In addition, when a user wants to assemble or dissemble the conventional bicycle cargo rack device, the user has to tighten or loosen every single screw with a screwdriver, which is time-consuming and not user-friendly.

US 2020/231239 A1 discloses a fastening system for fastening bags to a motorcycle. The fastening system shows a rack-carrying device in accordance with the preamble of claim 1.

US 2012/205411 A1 discloses an adjustable accessory support assembly.

US 2008/073396 A1 discloses a storage box assembly for motorcycle.

WO 2018/203743 A1 discloses a mounting system for a bicycle luggage carrier.

Therefore, an object of the disclosure is to provide a rack-carrying device that can alleviate at least one of the drawbacks of the prior art.

According to an aspect of the disclosure, there is provided a rack-carrying device according to claim 1.

Other features and advantages of the disclosure will become apparent in the following detailed description of the embodiment(s) with reference to the accompanying drawings. It is noted that various features may not be drawn to scale.
Fig. 1 is a perspective view illustrating a first embodiment of a rack-carrying device according to the disclosure mounted to a supporting rack of a vehicle.
Fig. 2 is a partly exploded perspective view of the first embodiment and the supporting rack.
Fig. 3 is a view similar to Fig. 2, but from another viewing angle.
Fig. 4 is a perspective view illustrating a gripping unit of the first embodiment gripping two opposite sides of the supporting rack.
Fig. 5 is a perspective view illustrating the gripping unit gripping three different sides of the supporting rack.
Fig. 6 is a perspective view illustrating the gripping unit gripping the two opposite sides of the supporting rack in another manner.
Fig. 7 is a partly exploded perspective view of a second embodiment of the rack-carrying device according to the disclosure and the supporting rack.
Fig. 8 is a partly exploded perspective view of a third embodiment of the rack-carrying device according to the disclosure and the supporting rack.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

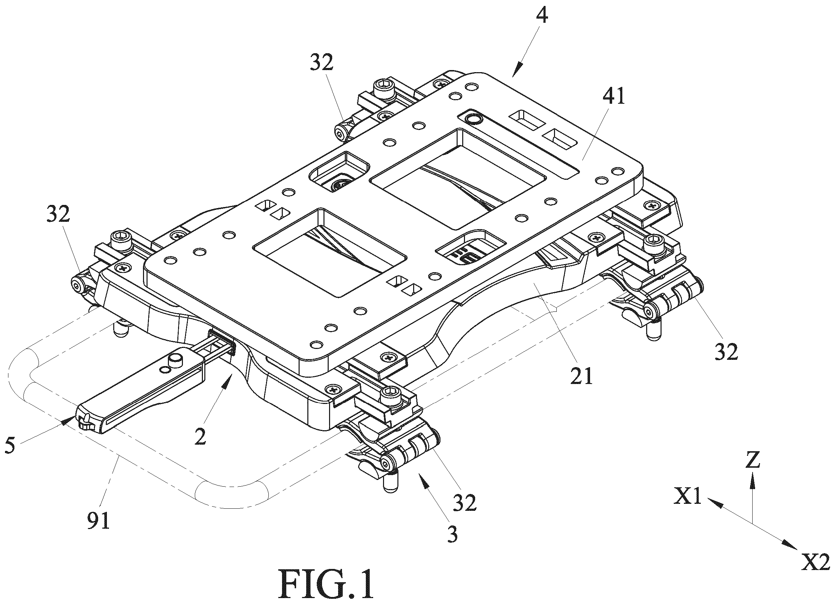

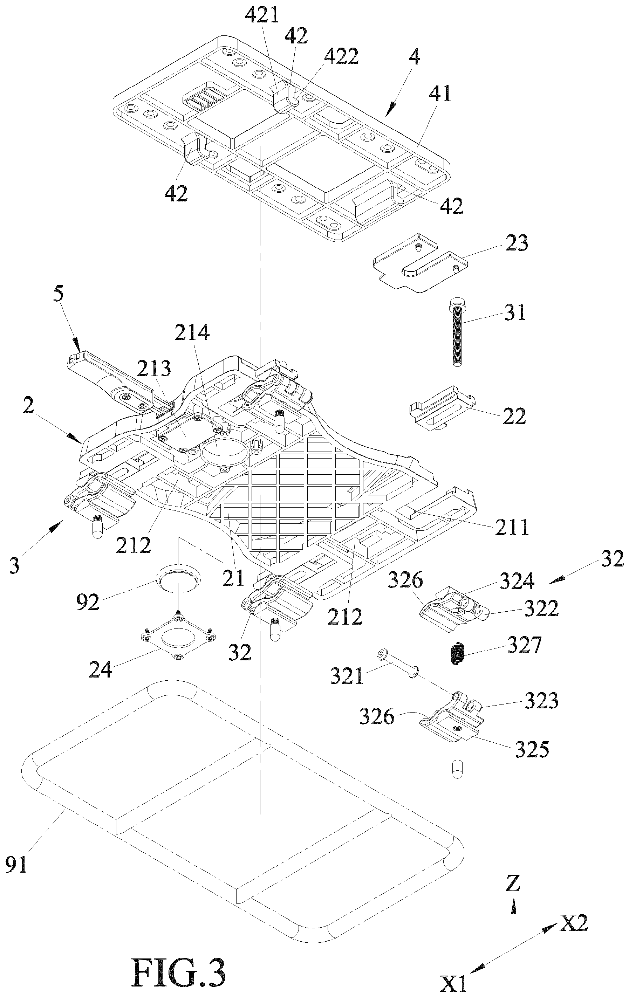

Referring to Figs. 1 to 3, a first embodiment of a rack-carrying device according to this disclosure includes a base board unit 2, a gripping unit 3, a connecting board unit 4, and a lock unit 5.

The base board unit 2 includes a base board body 21, four slide blocks 22, four block cover plates 23, and a storage cover plate 24. The base board body 21 extends on an imaginary plane that is perpendicular to an up-down direction (Z). The slide blocks 22 are slidably disposed on the base board body 21. The block cover plates 23 are disposed on the base board body 21. The storage cover plate 24 is disposed on the base board body 21.

The base board body 21 has four slide grooves 211, three engaging grooves 212, a lock groove 213, and a storage groove 214. Each of the slide blocks 22 is slidable relative to a respective one of the slide grooves 211 in a direction orthogonal to the up-down direction (Z). The storage cover plate 24 at least partially covers the storage groove 214. The slide grooves 211 are divided into two groove pairs that are spaced apart from each other. The slide grooves 211 in each groove pairs are spaced apart from each other in a first lateral direction (X1) orthogonal to the up-down direction (Z). One of the slide grooves 211 in each groove pairs opens upwardly and opens in the first lateral direction (X1). The other one of the slide grooves 211 in each groove pairs opens upwardly and opens in a second lateral direction (X2) opposite to the first lateral direction (X1). The storage groove 214 is adapted for accommodating a tracking device 92. The tracking device 92 may be, but not limited to be, an AirTag. It is noted that, in the first embodiment, the base board body 21 has a top surface and a bottom surface that is located below the top surface in the up-down direction (Z), each of the engaging grooves 212 extends through the top and bottom surfaces of the base board body 21, and the lock groove 213 only extends through the top surface of the base board body 21 (i.e., the lock groove 213 opens upwardly). However, in one embodiment, each of the engaging grooves 212 may only extend through the top surface of the base board body 21 (i.e., each of the engaging grooves 212 opens upwardly), and the lock groove 213 may extend through the top and bottom surfaces of the base board body 21.

Each of the block cover plates 23 is located at the top surface of the base board body 21 so that each of the block cover plates 23 covers a respective one of the slide grooves 211 and prevents a respective one of the slide blocks 22 from being separated from the respective one of the slide grooves 211.

The gripping unit 3 includes four fastening rods 31 and four gripping subunits 32. The fastening rods 31 respectively extend through the slide blocks 22 along the up-down direction (Z). Each of the gripping subunits 32 is located below a respective one of the slide blocks 22, is fastened to the respective one of the slide blocks 22 by a respective one of the fastening rods 31, and is operable to rotate relative to the respective one of the slide blocks 22. Each of the fastening rods 31 is configured to be a bolt. Rotations of the gripping subunits 32 may be adjusted separately.

Each of the gripping subunits 32 has a rotation rod 321, an upper gripping claw 322, a lower gripping claw 323 that is located below the upper gripping claw 322, a first connecting portion 324 that is disposed on a top surface of the upper gripping claw 322 and that is located below the respective one of the slide blocks 22, a second connecting portion 325 that is disposed on a bottom surface of the lower gripping claw 323, two cushion members 326 that are respectively disposed on a bottom surface of the upper gripping claw 322 and a top surface of the lower gripping claw 323, and a resilient member 327. Each of the upper gripping claws 322 and the lower gripping claws 323 of the gripping subunits 32 has a connecting section, and a gripping section opposite to the connecting section. For each of the gripping subunits 32, the gripping section and the connecting section of the upper gripping claw 322 respectively correspond in position to the gripping section and the connecting section of the lower gripping claw 323. The rotation rod 321 of each of the gripping subunits 32 is rotatably connected to the connecting section of the upper gripping claw 322 of the gripping subunit 32 and the connecting section of the lower gripping claw 322 of the gripping subunit 32. For each of the gripping subunits 32, the resilient member 327 is disposed between the upper gripping claw 322 and the lower gripping claw 323, and provides a restoring force for the gripping section of the upper gripping claw 322 and the gripping section of the lower gripping claw to move away from each other. Each of the fastening rods 31 extends through the respective one of the slide blocks 22, the first connecting portion 324 of the respective one of the gripping subunits 32, the upper gripping claw 322 of the respective one of the gripping subunits 32, and the lower gripping claw 323 of the respective one of the gripping subunits 32, and is threadedly connected to the second connecting portion 325 of the respective one of the gripping subunits 32 so that a distance between the gripping section of the upper gripping claw 322 and the gripping section of the lower gripping claw 323 of each of the gripping subunits 32 is adjustable. In the first embodiment, for each of the gripping subunits 32, a cross section of the bottom surface of the upper gripping claw 322 is arc-shaped, and a cross section of the top surface of the lower gripping claw 323 is arc-shaped.

The connecting board unit 4 is removably disposed on the base board unit 2, and includes a connecting board body 41 and three engaging blocks 42. The connecting board body 41 is located above the plate body 21. The engaging blocks 42 are disposed on a bottom side of the connecting board body 41, and respectively and removably engage the engaging grooves 212. Each of the engaging blocks 42 has a main portion 421 that is disposed on the bottom side of the connecting board body 41, and a hook portion 422 that is connected to the main portion 421, and that is substantially perpendicular to the connecting portion 421 such that a cross section of each of the engaging blocks 42 is substantially L-shaped. It is noted that, a number of the engaging blocks 42 of the connecting board 4 may not be limited to three, and a number of the engaging grooves 212 of the base board body 21 may not be limited to three. In certain embodiments, the number of the engaging blocks 42 and the number of the engaging grooves 212 may be any positive integers according to actual requirements.

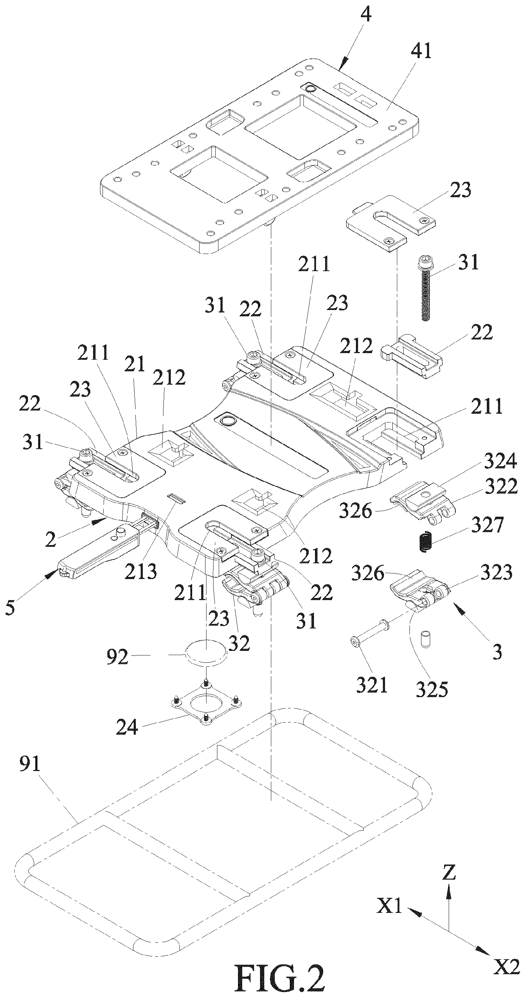

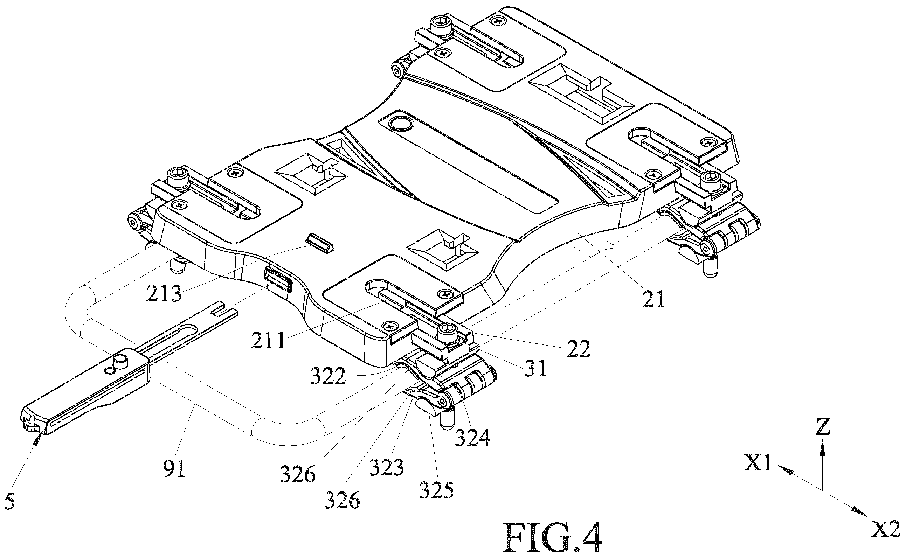

The lock unit 5 is disposed on the lock groove 213, and is operable to engage the connecting board body 41 so that the connecting board body 41 is prevented from moving relative to the base board body 21. Specifically, referring to Figs. 4, 7, and 8, in cooperation with Fig. 2, the lock unit 5 includes separable first part and second part. The first part of the lock unit 5 is mounted to the lock groove 213. When the second part of the lock unit 5 is separated from the base board body 21, the first part of the lock unit 5 protrudes upwardly out of the lock groove 213 so that the first part of the lock unit 5 engages the connecting board body 41 to prevent the connecting board body 41 from moving relative to the base board body 21. When the second part of the lock unit 5 is inserted into the base board body 21, the first part of the lock unit 5 is urged to move downwardly such that the first part of the lock unit 5 does not protrude from the top surface of the base board body 21. The first part of the lock unit 5 is thus disengaged from the connecting board body 41. It is noted that, in one embodiment, the lock unit 5 may have a different configuration as long as the lock unit 5 is operable to prevent one of the connecting board body 41 and the base board body 21 from moving relative to another one of the connecting board body 41 and the base board body 21.

Referring back to Figs. 2 to 4, the rack-carrying device is adapted to be mounted to a supporting rack 91 of a vehicle (not shown), and is adapted for carrying a cargo rack (not shown). In the first embodiment, the supporting rack 91 is a bicycle rack. In the beginning of assembly of the cargo rack, the rack-carrying device, and the supporting rack 91, the cargo rack is mounted to the connecting board unit 4. Then, the fastening rods 31 that are respectively and threadedly connected to the connecting portions 325 of the gripping units 32 are loosened so that the gripping sections of the upper and lower gripping claws 322, 323 of each of the gripping subunits 32 are urged to move away from each other by the restoring force provided by the resilient member 327 of the gripping subunit 32. Afterwards, the slide blocks 22 are urged to respectively slide along the slide grooves 211 so that a distance between the gripping subunits 32 that are fastened to the slide blocks 22 which are prevented from being separated from the slide grooves 211 in each groove pairs in the first lateral direction (X1) corresponds to a distance between two opposite sides of the supporting rack 91 in the first lateral direction (X1). Then, the gripping subunits 32 are urged to abut against the opposite sides of the supporting rack 91, and the fastening rods 31 are tightened so that the gripping sections of the upper and lower gripping claws 322, 323 of each of the gripping subunits 32 tightly grip the supporting rack 91. By virtue of the cross section of the bottom surface of the upper gripping claw 322 and the cross section of the top surface of the lower gripping claw 323 of each of the gripping subunits 32 being arc-shaped, and by virtue of the cushion members 326 of each of the gripping subunits 32 being respectively disposed on the bottom surface of the upper gripping claw 322 and the top surface of the lower gripping claw 323 of the gripping subunit 32, the gripping subunits 32 may stably grip the opposite sides of the supporting rack 91. The base board unit 2 is thus disposed on the supporting rack 91. It is noted that, in the first embodiment, each of the slide blocks 22 is slidable in the first and second lateral directions (X1, X2), and each of the gripping subunits 32 is rotatable relative to the respective one of the slide blocks 22. Therefore, the gripping subunits 32 may grip another supporting rack that is different from the supporting rack 91 in terms of sizes or shapes so that the base board unit 2 may be suitable for a variety of supporting racks.

Next, the connecting board unit 4 is placed on the base board unit 2 so that the engaging blocks 42 respectively extend through the engaging grooves 212. Then, the connecting board unit 4 is urged to move relative to the base board unit 2 so that the hook portions 422 of the engaging blocks 42 are located under the bottom surface of the base board body 21. At this time, the engaging blocks 42 respectively engage the engaging grooves 212, and, by virtue of the cross section of each of the engaging blocks 42 being substantially L-shaped and by virtue of the hook portions 422 being located under the bottom surface of the base board body 21, the connecting board unit 4 is prevented from being separated from the base board unit 2 in the up-down direction (Z). Afterwards, when the second part of the lock unit 5 is separated from the base board body 21 and the first part of the lock unit 5 engages the connecting board body 41, the connecting board body 41 is prevented from moving relative to the base board body 21. Consequently, the connecting board unit 4 and the base board unit 2 are firmly assembled.

Because the base board unit 2 that is firmly connected to the supporting rack 91 by the gripping unit 3 provides a supporting area that is greater than a supporting area which the supporting rack 91 provides to the connecting board unit 4 and the cargo rack carried by the connecting board unit 4, the connecting board unit 4 and the cargo rack may be well supported when the connecting board unit 4 and the base board unit 2 are firmly assembled. Thus, the cargo rack may be stably carried by the rack-carrying device that is mounted to the supporting rack 91, which may ensure safety during transport.

Moreover, the engaging blocks 42 may swiftly engage the engaging grooves 212 when the connecting board unit 4 is placed on and then is urged to move relative to the base board unit 2, and may be swiftly disengaged from the engaging grooves 212 when the connecting board unit 4 is urged to move relative to and then is lifted from the base board unit 2. That is to say, the rack-carrying device is provided with a quick-release mechanism for a user to quickly assemble and disassemble the connecting board unit 4 and the base board unit 2. In addition, the connecting board body 41 and the base board body 21 may be firmly assembled by the lock unit 5 without any tools, which facilitates the use of the rack-carrying device.

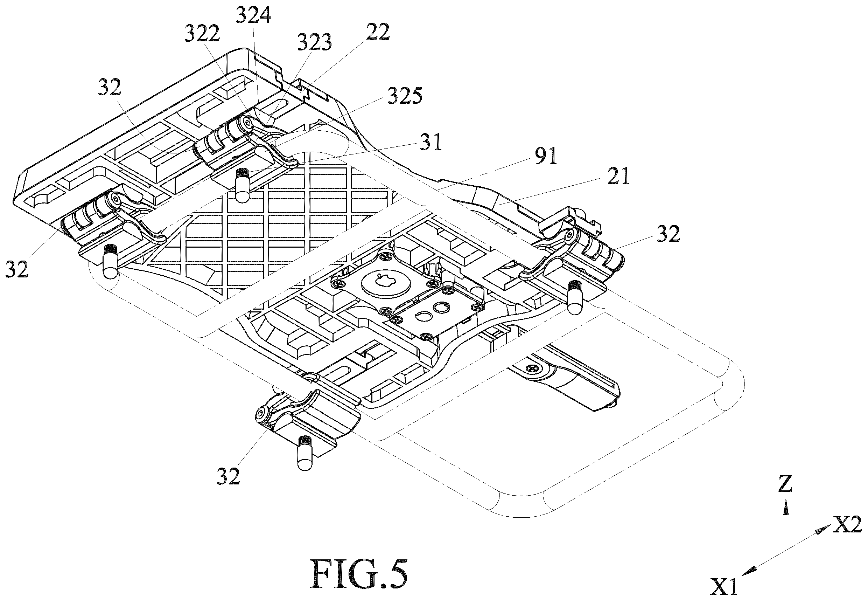

Referring to Fig. 5, the first embodiment is mounted to the supporting rack 91 in a different way. Specifically, compared with the first embodiment in Fig. 4, two of the gripping subunits 32 are rotated 90 degrees about the up-down direction (Z) to grip another side of the supporting rack 91 (i.e., one of two shorter sides of the supporting rack 91 in Fig. 5) while the remaining two of the gripping subunits 32 grip the opposite sides of the supporting rack 91 (i.e., longer sides of the supporting rack 91 in Fig. 5). Therefore, by virtue of the gripping subunit 32 being adjustable to grip the supporting rack 91 at different positions, the rack-carrying device may be relatively convenient to use.

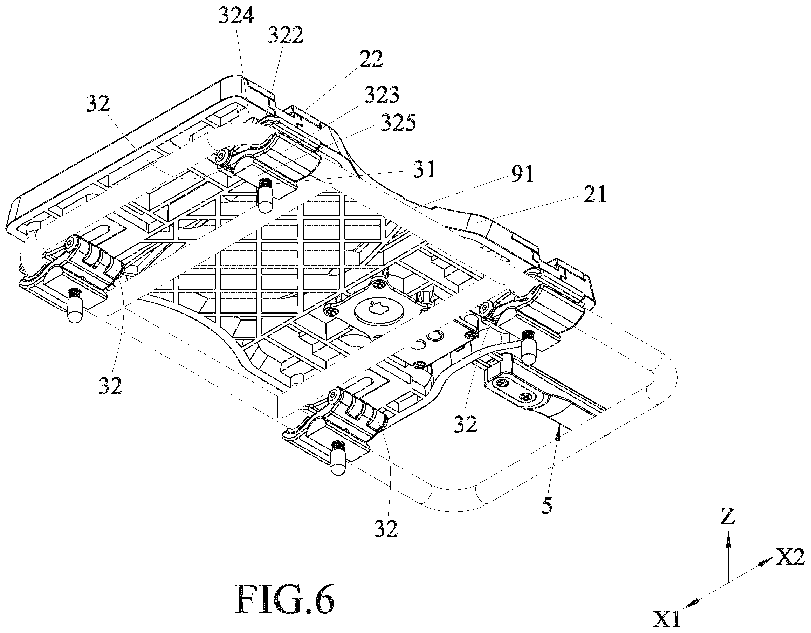

Referring to Fig. 6, because each of the gripping subunits 32 is operable to rotate relative to the respective one of the side blocks 22, the first embodiment may be mounted to the supporting rack 91 in another different way. Specifically, compared with the first embodiment in Fig. 4, each of the gripping subunits 32 is rotated 180 degrees about the up-down direction (Z) so that a length of the first embodiment in the first lateral direction (X1) may be shorten when the first embodiment is mounted to the supporting rack 91. Therefore, the rack-carrying device may be space saving.

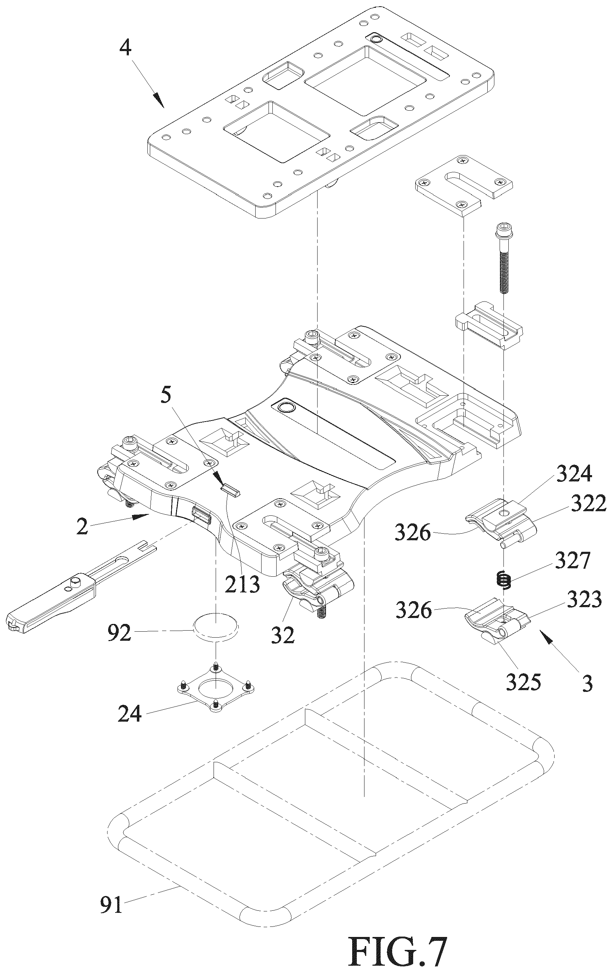

Referring to Fig. 7 again, a second embodiment of the rack-carrying device according to the disclosure is similar to the first embodiment except that, in the second embodiment, one of the connecting section of the upper gripping claw 322 and the connecting section of the lower gripping claw 323 of each of the gripping subunits 32 is formed as a rod, and another one of the connecting section of the upper gripping claw 322 and the connecting section of the lower gripping claw 323 of each of the gripping subunits 32 is formed as a sleeve, so that the connecting section of the upper gripping claw 322 and the connecting section of the lower gripping claw 323 of each of the gripping subunits 32 are rotatably interconnected. The rotation rod 321 may thus be omitted.

Therefore, the second embodiment may achieve the same purpose and effects as the first embodiment.

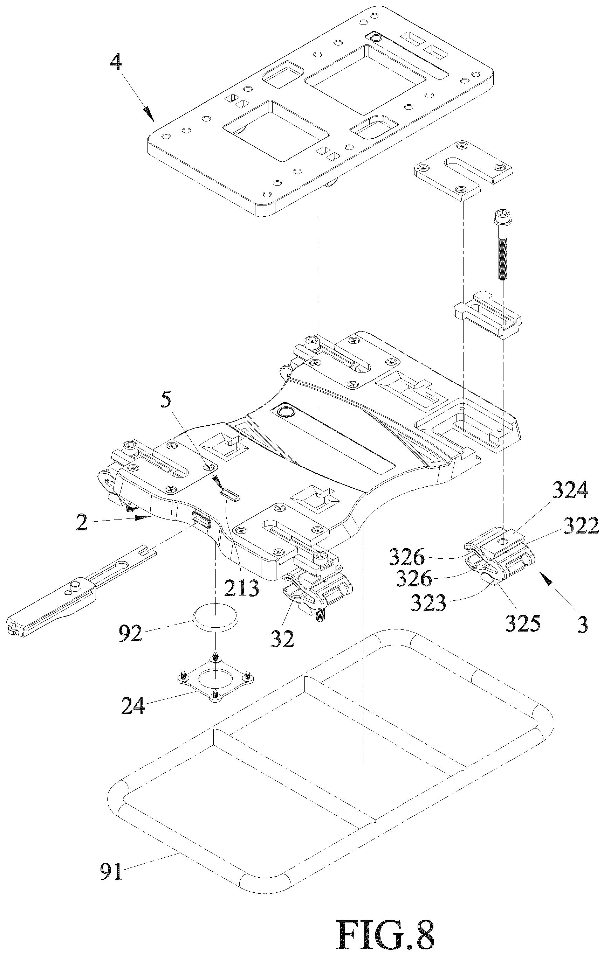

Referring to Fig. 8 again, a third embodiment of the rack-carrying device according to the disclosure is similar to the first embodiment except that, in the third embodiment, the connecting section of the upper gripping claw 322 and the connecting section of the lower gripping claw 323 of each of the gripping subunits 32 are integrally formed, and the gripping section of the upper gripping claw 322 and the gripping section of the lower gripping claw 323 of each of the gripping subunits 32 are spaced apart from each other. The rotation rod 321 and the resilient member 327 may thus be omitted. When the gripping sections of the upper and lower gripping claws 322, 323 of each of the gripping subunits 32 are pushed toward the supporting rack 91, the upper and lower gripping claws 322, 323 of the gripping subunit 32 are resiliently bent and cooperatively grip the supporting rack 91. Afterwards, when the fastening rods 31 are tightened, the gripping subunits 32 may fixedly grip the supporting rack 91.

Thus, the third embodiment may achieve the same purpose and effects as the first embodiment.

In summary, by virtue of each of the slide blocks 22 being slidable relative to the respective one of the slide grooves 211, and by virtue of each of the gripping subunits 32 being operable to rotate relative to the respective one of the slide blocks 22, the rack-carrying device may be suitable for a variety of supporting racks that differ in sizes and shapes, and may be space-saving. In addition, the rack-carrying device may swiftly grip the supporting rack 91, and may provide a greater supporting area to support and carry a cargo rack. The connecting board unit 4 and the lock unit 5 cooperatively serve as the quick-release mechanism so that the rack-carrying device may be user-friendly. Therefore, the purpose of the disclosure is achieved.

In the description above, for the purposes of explanation, numerous specific details have been set forth in order to provide a thorough understanding of the embodiment(s).

The scope of the invention is defined by the appended claims.

## Claims

1. A rack-carrying device comprising:
a base board unit (2) including a base board body (21) that extends on an imaginary plane perpendicular to an up-down direction (Z), and a plurality of slide blocks (22) that are disposed on said base board body (21), said base board body (21) having a plurality of slide grooves (211), and at least one engaging groove (212) that opens upwardly, each of said slide blocks (22) being slidable relative to a respective one of said slide grooves (211) in a direction orthogonal to the up-down direction (Z);
a gripping unit (3) including a plurality of fastening rods (31) that respectively extend through said slide blocks (22) along the up-down direction (Z), and a plurality of gripping subunits (32) each of which is located below a respective one of said slide blocks (22), is fastened to the respective one of said slide blocks (22) by a respective one of said fastening rods (31), and is operable to rotate relative to the respective one of said slide blocks (22), each of said gripping subunits (32) having an upper gripping claw (322), a lower gripping claw (323) that is located below said upper gripping claw (322), a first connecting portion (324) that is disposed on said upper gripping claw (322), and a second connecting portion (325) that is disposed on said lower gripping claw (323), each of said fastening rods (31) extending through the respective one of said slide blocks (22), said first connecting portion (324) of the respective one of said gripping subunits (32), said upper gripping claw (322) of the respective one of said gripping subunits (32), and said lower gripping claw (323) of the respective one of said gripping subunits (32), and being threadedly connected to said second connecting portion (325) of the respective one of said gripping subunits (32) so that a distance between said upper gripping claw (322) and said lower gripping claw (323) of each of said gripping subunits (32) is adjustable; and
a connecting board unit (4) including a connecting board body (41) that is located above said base board body (21), and at least one engaging block (42) that is disposed on said connecting board body (41) and that removably engages said at least one engaging groove (212);
the rack-carrying device being **characterized in that**:
each of said upper gripping claws (322) and said lower gripping claws (323) of said gripping subunits (32) has a connecting section, and a gripping section opposite to said connecting section, for each of said gripping subunits (32), said gripping section and said connecting section of said upper gripping claw (322) respectively corresponding in position to said gripping section and said connecting section of said lower gripping claw (323), each of said gripping subunits (32) further having a rotation rod (321) that is rotatably connected to said connecting section of said upper gripping claw (322) of said gripping subunit (32) and said connecting section of said lower gripping claw (323) of said gripping subunit (32), and a resilient member (327) that is disposed between said upper gripping claw (322) and said lower gripping claw (323) of said gripping subunit (32), and that provides a restoring force for said gripping section of said upper gripping claw (322) of said gripping subunit (32) and said gripping section of said lower gripping claw (323) of said gripping subunit (32) to move away from each other.

2. A rack-carrying device comprising:
a base board unit (2) including a base board body (21) that extends on an imaginary plane perpendicular to an up-down direction (Z), and a plurality of slide blocks (22) that are disposed on said base board body (21), said base board body (21) having a plurality of slide grooves (211), and at least one engaging groove (212) that opens upwardly, each of said slide blocks (22) being slidable relative to a respective one of said slide grooves (211) in a direction orthogonal to the up-down direction (Z);
a gripping unit (3) including a plurality of fastening rods (31) that respectively extend through said slide blocks (22) along the up-down direction (Z), and a plurality of gripping subunits (32) each of which is located below a respective one of said slide blocks (22), is fastened to the respective one of said slide blocks (22) by a respective one of said fastening rods (31), and is operable to rotate relative to the respective one of said slide blocks (22), each of said gripping subunits (32) having an upper gripping claw (322), a lower gripping claw (323) that is located below said upper gripping claw (322), a first connecting portion (324) that is disposed on said upper gripping claw (322), and a second connecting portion (325) that is disposed on said lower gripping claw (323), each of said fastening rods (31) extending through the respective one of said slide blocks (22), said first connecting portion (324) of the respective one of said gripping subunits (32), said upper gripping claw (322) of the respective one of said gripping subunits (32), and said lower gripping claw (323) of the respective one of said gripping subunits (32), and being threadedly connected to said second connecting portion (325) of the respective one of said gripping subunits (32) so that a distance between said upper gripping claw (322) and said lower gripping claw (323) of each of said gripping subunits (32) is adjustable; and
a connecting board unit (4) including a connecting board body (41) that is located above said base board body (21), and at least one engaging block (42) that is disposed on said connecting board body (41) and that removably engages said at least one engaging groove (212);
the rack-carrying device being **characterized in that**:
each of said upper gripping claws (322) and said lower gripping claws (323) of said gripping subunits (32) has a connecting section, and a gripping section opposite to said connecting section, for each of said gripping subunits (32), said gripping section and said connecting section of said upper gripping claw (322) respectively corresponding in position to said gripping section and connecting section of said lower gripping claw (323), said connecting section of said upper gripping claw (322) and said connecting section of said lower gripping claw (323) of each of said gripping subunits (32) being rotatably interconnected.

3. A rack-carrying device comprising:
a base board unit (2) including a base board body (21) that extends on an imaginary plane perpendicular to an up-down direction (Z), and a plurality of slide blocks (22) that are disposed on said base board body (21), said base board body (21) having a plurality of slide grooves (211), and at least one engaging groove (212) that opens upwardly, each of said slide blocks (22) being slidable relative to a respective one of said slide grooves (211) in a direction orthogonal to the up-down direction (Z);
a gripping unit (3) including a plurality of fastening rods (31) that respectively extend through said slide blocks (22) along the up-down direction (Z), and a plurality of gripping subunits (32) each of which is located below a respective one of said slide blocks (22), is fastened to the respective one of said slide blocks (22) by a respective one of said fastening rods (31), and is operable to rotate relative to the respective one of said slide blocks (22), each of said gripping subunits (32) having an upper gripping claw (322), a lower gripping claw (323) that is located below said upper gripping claw (322), a first connecting portion (324) that is disposed on said upper gripping claw (322), and a second connecting portion (325) that is disposed on said lower gripping claw (323), each of said fastening rods (31) extending through the respective one of said slide blocks (22), said first connecting portion (324) of the respective one of said gripping subunits (32), said upper gripping claw (322) of the respective one of said gripping subunits (32), and said lower gripping claw (323) of the respective one of said gripping subunits (32), and being threadedly connected to said second connecting portion (325) of the respective one of said gripping subunits (32) so that a distance between said upper gripping claw (322) and said lower gripping claw (323) of each of said gripping subunits (32) is adjustable; and
a connecting board unit (4) including a connecting board body (41) that is located above said base board body (21), and at least one engaging block (42) that is disposed on said connecting board body (41) and that removably engages said at least one engaging groove (212);
the rack-carrying device being **characterized in that**:
each of said upper gripping claws (322) and said lower gripping claws (323) of said gripping subunits (32) has a connecting section, and a gripping section opposite to said connecting section, for each of said gripping subunits (32), said gripping section and said connecting section of said upper gripping claw (322) respectively corresponding in position to said gripping section and said connecting section of said lower gripping claw (323), said connecting section of said upper gripping claw (322) and said connecting section of said lower gripping claw (323) of each of said gripping subunits (32) being integrally formed, said gripping section of said upper gripping claw (322) and said gripping section of said lower gripping claw (323) of each of said gripping subunits (32) being spaced apart from each other.

4. The rack-carrying device as claimed in any one of claims 1 to 3, wherein for each of said gripping subunits (32), a cross section of a bottom surface of said upper gripping claw (322) is arc-shaped, and a cross section of a top surface of said lower gripping claw (323) is arc-shaped.

5. The rack-carrying device as claimed in claim 4, wherein each of said gripping subunits (32) further includes two cushion members (326) that are respectively disposed on said bottom surface of said upper gripping claw (322) of said gripping subunit (32) and said top surface of said lower gripping claw (323) of said gripping subunit (32).

6. The rack-carrying device as claimed in any one of claims 1 to 5, wherein said base board body (21) further has a lock groove (213) that opens upwardly, the rack-carrying device further comprising a lock unit (5) that is disposed on said lock groove (213), and that is operable to engage said connecting board body (41) so that one of said base board body (21) and said connecting board body (41) is prevented from moving relative to another one of said base board body (21) and said connecting board body (41).

7. The rack-carrying device as claimed in any one of claims 1 to 6, wherein said base board body (21) further has a storage groove (214), and said base board unit (2) further includes a storage cover plate (24) that is disposed on said base board body (21) and that at least partially covers said storage groove (214).

## Patentansprüche

1. Gestell-Trägervorrichtung, umfassend:
eine Grundplatteneinheit (2), die einen Grundplattenkörper (21), der sich auf einer imaginären Ebene senkrecht zu einer Auf-Ab-Richtung (Z) erstreckt, und mehrere Gleitblöcke (22), die auf dem Grundplattenkörper (21) angeordnet sind, einschließt, wobei der Grundplattenkörper (21) mehrere Gleitnuten (211) und mindestens eine Eingriffsnut (212) aufweist, die sich nach oben öffnet, und wobei jeder der Gleitblöcke (22) relativ zu einer jeweiligen Gleitnut (211) in einer Richtung senkrecht zu der Auf-Ab-Richtung (Z) verschiebbar ist;
eine Greifeinheit (3), die mehrere Befestigungsstangen (31), die sich jeweils durch die Gleitblöcke (22) entlang der Auf-Ab-Richtung (Z) erstrecken, und mehrere Greifuntereinheiten (32), von denen jede sich unterhalb eines jeweiligen Gleitblocks (22) befindet, an dem jeweiligen Gleitblock (22) durch eine jeweilige Befestigungsstange (31) befestigt ist und relativ zu dem jeweiligen Gleitblock (22) rotieren kann, einschließt, wobei jede der Greifuntereinheiten (32) eine obere Greifklaue (322), eine unter der oberen Greifklaue (322) angeordnete untere Greifklaue (323), einen ersten Verbindungsabschnitt (324), der an der oberen Greifklaue (322) angeordnet ist, und einen zweiten Verbindungsabschnitt (325) der an der unteren Greifklaue (323) angeordnet ist, aufweist, wobei sich jede der Befestigungsstangen (31) durch den jeweiligen Gleitblock (22), den ersten Verbindungsabschnitt (324) der jeweiligen Greifuntereinheit (32), die obere Greifklaue (322) der jeweiligen Greifuntereinheit (32) und die untere Greifklaue (323) der jeweiligen Greifuntereinheit (32) erstreckt und mit dem zweiten Verbindungsabschnitt (325) der jeweiligen Greifuntereinheit (32) verschraubt ist, so dass ein Abstand zwischen der oberen Greifklaue (322) und der unteren Greifklaue (323) jeder Greifuntereinheit (32) einstellbar ist; und
eine Verbindungsplatteneinheit (4), die einen Verbindungsplattenkörper (41), der sich über dem Grundplattenkörper (21) befindet, und mindestens einen Eingriffsblock (42), der auf dem Verbindungsplattenkörper (41) angeordnet ist und lösbar in die mindestens eine Eingriffsnut (212) eingreift, einschließt;
die Gestell-Trägervorrichtung ist **dadurch gekennzeichnet, dass:**
jede der oberen Greifklauen (322) und der unteren Greifklauen (323) der Greifuntereinheiten (32) einen Verbindungsabschnitt und einen dem Verbindungsabschnitt gegenüberliegenden Greifabschnitt für jede der Greifuntereinheiten (32) aufweist, wobei der Greifabschnitt und der Verbindungsabschnitt der oberen Greifklaue (322) in ihrer Position jeweils dem Greifabschnitt und dem Verbindungsabschnitt der unteren Greifklaue (323) entsprechen, wobei jede der Greifuntereinheiten (32) ferner eine Drehstange (321), die drehbar mit dem Verbindungsabschnitt der oberen Greifklaue (322) der Greifuntereinheit (32) und dem Verbindungsabschnitt der unteren Greifklaue (323) der Greifuntereinheit (32) verbunden ist, und ein elastisches Element (327), das zwischen der oberen Greifklaue (322) und der unteren Greifklaue (323) der Greifuntereinheit (32) angeordnet ist und eine Rückstellkraft bereitstellt, aufweist, wodurch sich der Greifabschnitt der oberen Greifklaue (322) der Greifuntereinheit (32) und der Greifabschnitt der unteren Greifklaue (323) der Greifuntereinheit (32) voneinander weg bewegen.

2. Gestell-Trägervorrichtung, umfassend:
eine Grundplatteneinheit (2), die einen Grundplattenkörper (21), der sich auf einer imaginären Ebene senkrecht zu einer Auf-Ab-Richtung (Z) erstreckt, und mehrere Gleitblöcke (22), die auf dem Grundplattenkörper (21) angeordnet sind, einschließt, wobei der Grundplattenkörper (21) mehrere Gleitnuten (211) und mindestens eine Eingriffsnut (212) aufweist, die sich nach oben öffnet, und wobei jeder der Gleitblöcke (22) relativ zu einer jeweiligen Gleitnut (211) in einer Richtung senkrecht zu der Auf-Ab-Richtung (Z) verschiebbar ist;
eine Greifeinheit (3), die eine Vielzahl von Befestigungsstangen (31), die sich jeweils durch die Gleitblöcke (22) entlang der Auf-Ab-Richtung (Z) erstrecken, und mehrere Greifuntereinheiten (32), von denen jede sich unterhalb eines jeweiligen Gleitblocks (22) befindet, an dem jeweiligen Gleitblock (22) durch eine jeweilige Befestigungsstange (31) befestigt ist und relativ zu dem jeweiligen Gleitblock (22) rotieren kann, einschließt, wobei jede der Greifuntereinheiten (32) eine obere Greifklaue (322), eine unter der oberen Greifklaue (322) angeordnete untere Greifklaue (323), einen ersten Verbindungsabschnitt (324), der an der oberen Greifklaue (322) angeordnet ist, und einen zweiten Verbindungsabschnitt (325) der an der unteren Greifklaue (323) angeordnet ist, aufweist, wobei sich jede der Befestigungsstangen (31) durch den jeweiligen Gleitblock (22), den ersten Verbindungsabschnitt (324) der jeweiligen Greifuntereinheit (32), die obere Greifklaue (322) der jeweiligen Greifuntereinheit (32) und die untere Greifklaue (323) der jeweiligen Greifuntereinheit (32) erstreckt und mit dem zweiten Verbindungsabschnitt (325) der jeweiligen Greifuntereinheit (32) verschraubt ist, so dass ein Abstand zwischen der oberen Greifklaue (322) und der unteren Greifklaue (323) jeder Greifuntereinheit (32) einstellbar ist; und
eine Verbindungsplatteneinheit (4), die einen Verbindungsplattenkörper (41), der sich über dem Grundplattenkörper (21) befindet, und mindestens einen Eingriffsblock (42), der auf dem Verbindungsplattenkörper (41) angeordnet ist und lösbar in die mindestens eine Eingriffsnut (212) eingreift, einschließt;
die Gestell-Trägervorrichtung ist **dadurch gekennzeichnet, dass:**
jede der oberen Greifklauen (322) und der unteren Greifklauen (323) der Greifuntereinheiten (32) einen Verbindungsabschnitt und einen dem Verbindungsabschnitt gegenüberliegenden Greifabschnitt für jede der Greifuntereinheiten (32) aufweist, wobei der Greifabschnitt und der Verbindungsabschnitt der oberen Greifklaue (322) in ihrer Position jeweils dem Greifabschnitt und dem Verbindungsabschnitt der unteren Greifklaue (323) entsprechen, und der Verbindungsabschnitt der oberen Greifklaue (322) und der Verbindungsabschnitt der unteren Greifklaue (323) jeder der Greifuntereinheiten (32) drehbar miteinander verbunden sind.

3. Gestell-Trägervorrichtung, umfassend:
eine Grundplatteneinheit (2), die einen Grundplattenkörper (21), der sich auf einer imaginären Ebene senkrecht zu einer Auf-Ab-Richtung (Z) erstreckt, und mehrere Gleitblöcke (22), die auf dem Grundplattenkörper (21) angeordnet sind, einschließt, wobei der Grundplattenkörper (21) mehrere Gleitnuten (211) und mindestens eine Eingriffsnut (212) aufweist, die sich nach oben öffnet, und wobei jeder der Gleitblöcke (22) relativ zu einer jeweiligen Gleitnut (211) in einer Richtung senkrecht zu der Auf-Ab-Richtung (Z) verschiebbar ist;
eine Greifeinheit (3), die eine Vielzahl von Befestigungsstangen (31), die sich jeweils durch die Gleitblöcke (22) entlang der Auf-Ab-Richtung (Z) erstrecken, und mehrere Greifuntereinheiten (32), von denen jede sich unterhalb eines jeweiligen Gleitblocks (22) befindet, an dem jeweiligen Gleitblock (22) durch eine jeweilige Befestigungsstange (31) befestigt ist und relativ zu dem jeweiligen Gleitblock (22) rotieren kann, einschließt, wobei jede der Greifuntereinheiten (32) eine obere Greifklaue (322), eine unter der oberen Greifklaue (322) angeordnete untere Greifklaue (323), einen ersten Verbindungsabschnitt (324), der an der oberen Greifklaue (322) angeordnet ist, und einen zweiten Verbindungsabschnitt (325) der an der unteren Greifklaue (323) angeordnet ist, aufweist, wobei sich jede der Befestigungsstangen (31) durch den jeweiligen Gleitblock (22), den ersten Verbindungsabschnitt (324) der jeweiligen Greifuntereinheit (32), die obere Greifklaue (322) der jeweiligen Greifuntereinheit (32) und die untere Greifklaue (323) der jeweiligen Greifuntereinheit (32) erstreckt und mit dem zweiten Verbindungsabschnitt (325) der jeweiligen Greifuntereinheit (32) verschraubt ist, so dass ein Abstand zwischen der oberen Greifklaue (322) und der unteren Greifklaue (323) jeder Greifuntereinheit (32) einstellbar ist; und
eine Verbindungsplatteneinheit (4), die einen Verbindungsplattenkörper (41), der sich über dem Grundplattenkörper (21) befindet, und mindestens einen Eingriffsblock (42), der auf dem Verbindungsplattenkörper (41) angeordnet ist und lösbar in die mindestens eine Eingriffsnut (212) eingreift, einschließt;
die Gestell-Trägervorrichtung ist **dadurch gekennzeichnet, dass:**
jede der oberen Greifklauen (322) und der unteren Greifklauen (323) der Greifuntereinheiten (32) einen Verbindungsabschnitt und einen dem Verbindungsabschnitt gegenüberliegenden Greifabschnitt für jede der Greifuntereinheiten (32) aufweist, wobei der Greifabschnitt und der Verbindungsabschnitt der oberen Greifklaue (322) in ihrer Position jeweils dem Greifabschnitt und dem Verbindungsabschnitt der unteren Greifklaue (323) entsprechen, wobei der Verbindungsabschnitt der oberen Greifklaue (322) und der Verbindungsabschnitt der unteren Greifklaue (323) jeder der Greifuntereinheiten (32) einstückig ausgebildet sind, wobei der Greifabschnitt der oberen Greifklaue (322) und der Greifabschnitt der unteren Greifklaue (323) jeder der Greifuntereinheiten (32) voneinander beabstandet sind.

4. Gestell-Trägervorrichtung nach einem der Ansprüche 1 bis 3, wobei bei jeder der Greifuntereinheiten (32) ein Querschnitt einer Unterseite der oberen Greifklaue (322) bogenförmig ist und ein Querschnitt einer Oberseite der unteren Greifklaue (323) bogenförmig ist.

5. Gestell-Trägervorrichtung nach Anspruch 4, wobei jede der Greifuntereinheiten (32) ferner zwei Polsterelemente (326) einschließt, die jeweils an der Unterseite der oberen Greifklaue (322) der Greifuntereinheit (32) und der Oberseite der unteren Greifklaue (323) der Greifuntereinheit (32) angeordnet sind.

6. Gestell-Trägervorrichtung nach einem der Ansprüche 1 bis 5, wobei der Grundplattenkörper (21) ferner eine Verriegelungsnut (213) aufweist, die sich nach oben öffnet, und die Gestell-Trägervorrichtung ferner eine Verriegelungseinheit (5) umfasst, die auf der Verriegelungsnut (213) angeordnet ist und mit dem Verbindungsplattenkörper (41) in Eingriff gebracht werden kann, sodass einer von dem Grundplattenkörper (21) und dem Verbindungsplattenkörper (41) daran gehindert wird, sich relativ zu dem anderen von dem Grundplattenkörper (21) und dem Verbindungsplattenkörper (41) zu bewegen.

7. Gestell-Trägervorrichtung nach einem der Ansprüche 1 bis 6, wobei der Grundplattenkörper (21) ferner eine Aufbewahrungsaussparung (214) aufweist und die Grundplatteneinheit (2) ferner eine Aufbewahrungsabdeckung (24) einschließt, die auf dem Grundplattenkörper (21) angeordnet ist und die Aufbewahrungsaussparung (214) zumindest teilweise abdeckt.

## Revendications

1. Dispositif porte-gage comprenant :
une unité de planche de base (2) comportant un corps de planche de base (21) qui s'étend sur un plan imaginaire perpendiculaire à une direction de haut en bas (Z), et une pluralité de blocs de coulissement (22) qui sont disposés sur ledit corps de planche de base (21), ledit corps de planche de base (21) présentant une pluralité de rainures de coulissement (211), et au moins une rainure d'engagement (212) qui s'ouvre vers le haut, chacun desdits blocs de coulissement (22) pouvant coulisser par rapport à une rainure respective desdites rainures de coulissement (211) dans une direction orthogonale à la direction de haut en bas (Z) ;
une unité de préhension (3) comportant une pluralité de tiges de fixation (31) qui s'étendent respectivement à travers lesdits blocs de coulissement (22) le long de la direction de haut en bas (Z), et une pluralité de sous-unités de préhension (32) dont chacune est située en dessous d'un bloc de coulissement respectif desdits blocs de coulissement (22), est fixée au bloc de coulissement respectif desdits blocs de coulissement (22) par une tige de fixation respective desdites tiges de fixation (31), et peut tourner par rapport au bloc de coulissement respectif desdits blocs de coulissement (22), chacune desdites sous-unités de préhension (32) présentant une griffe de préhension supérieure (322), une griffe de préhension inférieure (323) qui est située en dessous de ladite griffe de préhension supérieure (322), une première partie de connexion (324) qui est disposée sur ladite griffe de préhension supérieure (322), et une seconde partie de connexion (325) qui est disposée sur ladite griffe de préhension inférieure (323), chacune desdites tiges de fixation (31) s'étendant à travers le bloc de coulissement respectif desdits blocs de coulissement (22), ladite première partie de connexion (324) de la sous-unité de préhension respective desdites sous-unités de préhension (32), ladite griffe de préhension supérieure (322) de la sous-unité de préhension respective desdites sous-unités de préhension (32), et ladite griffe de préhension inférieure (323) de la sous-unité de préhension respective desdites sous-unités de préhension (32), et étant reliée par filetage à ladite seconde partie de connexion (325) de la sous-unité de préhension respective desdites sous-unités de préhension (32) de sorte qu'une distance entre ladite griffe de préhension supérieure (322) et ladite griffe de préhension inférieure (323) de chacune desdites sous-unités de préhension (32) soit ajustable ; et
une unité de planche de connexion (4) comportant un corps de planche de connexion (41) qui est situé au-dessus dudit corps de planche de base (21), et au moins un bloc d'engagement (42) qui est disposé sur ledit corps de planche de connexion (41) et qui s'engage de manière amovible dans ladite au moins une rainure d'engagement (212) ;
le dispositif porte-gage étant **caractérisé en ce que** :
chacune desdites griffes de préhension supérieures (322) et desdites griffes de préhension inférieures (323) desdites sous-unités de préhension (32) présente une section de connexion, et une section de préhension opposée à ladite section de connexion, pour chacune desdites sous-unités de préhension (32), ladite section de préhension et ladite section de connexion de ladite griffe de préhension supérieure (322)
correspondant respectivement en position à ladite section de préhension et à ladite section de connexion de ladite griffe de préhension inférieure (323), chacune desdites sous-unités de préhension (32) présentant en outre une tige de rotation (321) qui est connectée de manière rotative à ladite section de connexion de ladite griffe de préhension supérieure (322) de ladite sous-unité de préhension (32) et à ladite section de connexion de ladite griffe de préhension inférieure (323) de ladite sous-unité de préhension (32), et un élément élastique (327) qui est disposé entre ladite griffe de préhension supérieure (322) et ladite griffe de préhension inférieure (323) de ladite sous-unité de préhension (32), et qui fournit une force de rappel pour ladite section de préhension de ladite griffe de préhension supérieure (322) de ladite sous-unité de préhension (32) et ladite section de préhension de ladite griffe de préhension inférieure (323) de ladite sous-unité de préhension (32) afin de s'éloigner l'une de l'autre.

2. Dispositif porte-gage comprenant :
une unité de planche de base (2) comportant un corps de planche de base (21) qui s'étend sur un plan imaginaire perpendiculaire à une direction de haut en bas (Z), et une pluralité de blocs de coulissement (22) qui sont disposés sur ledit corps de planche de base (21), ledit corps de planche de base (21) présentant une pluralité de rainures de coulissement (211), et au moins une rainure d'engagement (212) qui s'ouvre vers le haut, chacun desdits blocs de coulissement (22) pouvant coulisser par rapport à une rainure respective desdites rainures de coulissement (211) dans une direction orthogonale à la direction de haut en bas (Z) ;
une unité de préhension (3) comportant une pluralité de tiges de fixation (31) qui s'étendent respectivement à travers lesdits blocs de coulissement (22) le long de la direction de haut en bas (Z), et une pluralité de sous-unités de préhension (32) dont chacune est située en dessous d'un bloc de coulissement respectif desdits blocs de coulissement (22), est fixée au bloc de coulissement respectif desdits blocs de coulissement (22) par une tige de fixation respective desdites tiges de fixation (31), et peut tourner par rapport au bloc de coulissement respectif desdits blocs de coulissement (22), chacune desdites sous-unités de préhension (32) présentant une griffe de préhension supérieure (322), une griffe de préhension inférieure (323) qui est située en dessous de ladite griffe de préhension supérieure (322), une première partie de connexion (324) qui est disposée sur ladite griffe de préhension supérieure (322), et une seconde partie de connexion (325) qui est disposée sur ladite griffe de préhension inférieure (323), chacune desdites tiges de fixation (31) s'étendant à travers le bloc de coulissement respectif desdits blocs de coulissement (22), ladite première partie de connexion (324) de la sous-unité de préhension respective desdites sous-unités de préhension (32), ladite griffe de préhension supérieure (322) de la sous-unité de préhension respective desdites sous-unités de préhension (32), et ladite griffe de préhension inférieure (323) de la sous-unité de préhension respective desdites sous-unités de préhension (32), et étant reliée par filetage à ladite seconde partie de connexion (325) de la sous-unité de préhension respective desdites sous-unités de préhension (32) de sorte qu'une distance entre ladite griffe de préhension supérieure (322) et ladite griffe de préhension inférieure (323) de chacune desdites sous-unités de préhension (32) soit ajustable ; et
une unité de planche de connexion (4) comportant un corps de planche de connexion (41) qui est situé au-dessus dudit corps de planche de base (21), et au moins un bloc d'engagement (42) qui est disposé sur ledit corps de planche de connexion (41) et qui s'engage de manière amovible dans ladite au moins une rainure d'engagement (212) ;
le dispositif porte-gage étant **caractérisé en ce que** :
chacune desdites griffes de préhension supérieures (322) et desdites griffes de préhension inférieures (323) desdites sous-unités de préhension (32) présente une section de connexion, et une section de préhension opposée à ladite section de connexion, pour chacune desdites sous-unités de préhension (32), ladite section de préhension et ladite section de connexion de ladite griffe de préhension supérieure (322) correspondant respectivement en position à ladite section de préhension et ladite section de connexion de ladite griffe de préhension inférieure (323), ladite section de connexion de ladite griffe de préhension supérieure (322) et ladite section de connexion de ladite griffe de préhension inférieure (323) de chacune desdites sous-unités de préhension (32) étant interconnectées de manière rotative.

3. Dispositif porte-gage comprenant :
une unité de planche de base (2) comportant un corps de planche de base (21) qui s'étend sur un plan imaginaire perpendiculaire à une direction de haut en bas (Z), et une pluralité de blocs de coulissement (22) qui sont disposés sur ledit corps de planche de base (21), ledit corps de planche de base (21) présentant une pluralité de rainures de coulissement (211), et au moins une rainure d'engagement (212) qui s'ouvre vers le haut, chacun desdits blocs de coulissement (22) pouvant coulisser par rapport à une rainure respective desdites rainures de coulissement (211) dans une direction orthogonale à la direction de haut en bas (Z) ;
une unité de préhension (3) comportant une pluralité de tiges de fixation (31) qui s'étendent respectivement à travers lesdits blocs de coulissement (22) le long de la direction de haut en bas (Z), et une pluralité de sous-unités de préhension (32) dont chacune est située en dessous d'un bloc de coulissement respectif desdits blocs de coulissement (22), est fixée au bloc de coulissement respectif desdits blocs de coulissement (22) par une tige de fixation respective desdites tiges de fixation (31), et peut tourner par rapport au bloc de coulissement respectif desdits blocs de coulissement (22), chacune desdites sous-unités de préhension (32) présentant une griffe de préhension supérieure (322), une griffe de préhension inférieure (323) qui est située en dessous de ladite griffe de préhension supérieure (322), une première partie de connexion (324) qui est disposée sur ladite griffe de préhension supérieure (322), et une seconde partie de connexion (325) qui est disposée sur ladite griffe de préhension inférieure (323), chacune desdites tiges de fixation (31) s'étendant à travers le bloc de coulissement respectif desdits blocs de coulissement (22), ladite première partie de connexion (324) de la sous-unité de préhension respective desdites sous-unités de préhension (32), ladite griffe de préhension supérieure (322) de la sous-unité de préhension respective desdites sous-unités de préhension (32), et ladite griffe de préhension inférieure (323) de la sous-unité de préhension respective desdites sous-unités de préhension (32), et étant reliée par filetage à ladite seconde partie de connexion (325) de la sous-unité de préhension respective desdites sous-unités de préhension (32) de sorte qu'une distance entre ladite griffe de préhension supérieure (322) et ladite griffe de préhension inférieure (323) de chacune desdites sous-unités de préhension (32) soit ajustable ; et
une unité de planche de connexion (4) comportant un corps de planche de connexion (41) qui est situé au-dessus dudit corps de planche de base (21), et au moins un bloc d'engagement (42) qui est disposé sur ledit corps de planche de connexion (41) et qui s'engage de manière amovible dans ladite au moins une rainure d'engagement (212) ;
le dispositif porte-gage étant **caractérisé en ce que** :
chacune desdites griffes de préhension supérieures (322) et desdites griffes de préhension inférieures (323) desdites sous-unités de préhension (32) présente une section de connexion, et une section de préhension opposée à ladite section de connexion, pour chacune desdites sous-unités de préhension (32), ladite section de préhension et ladite section de connexion de ladite griffe de préhension supérieure (322) correspondant respectivement en position à ladite section de préhension et à ladite section de connexion de ladite griffe de préhension inférieure (323), ladite section de connexion de ladite griffe de préhension supérieure (322) et ladite section de connexion de ladite griffe de préhension inférieure (323) de chacune desdites sous-unités de préhension (32) étant formées d'un seul tenant, ladite section de préhension de ladite griffe de préhension supérieure (322) et ladite section de préhension de ladite griffe de préhension inférieure (323) de chacune desdites sous-unités de préhension (32) étant espacées l'une de l'autre.

4. Dispositif porte-gage selon l'une quelconque des revendications 1 à 3, dans lequel, pour chacune desdites sous-unités de préhension (32), une section transversale d'une surface inférieure de ladite griffe de préhension supérieure (322) est en forme d'arc, et une section transversale d'une surface supérieure de ladite griffe de préhension inférieure (323) est en forme d'arc.

5. Dispositif porte-gage selon la revendication 4, dans lequel chacune desdites sous-unités de préhension (32) comporte en outre deux éléments amortisseurs (326) qui sont respectivement disposés sur ladite surface inférieure de ladite griffe de préhension supérieure (322) de ladite sous-unité de préhension (32) et sur ladite surface supérieure de ladite griffe de préhension inférieure (323) de ladite sous-unité de préhension (32).

6. Dispositif porte-gage selon l'une quelconque des revendications 1 à 5, dans lequel ledit corps de planche de base (21) présente en outre une rainure de verrouillage (213) qui s'ouvre vers le haut, le dispositif porte-gage comportant en outre une unité de verrouillage (5) qui est disposée sur ladite rainure de verrouillage (213), et qui peut être actionnée pour engager ledit corps de planche de connexion (41) de manière à empêcher l'un dudit corps de planche de base (21) et dudit corps de planche de connexion (41) de se déplacer par rapport à une dudit corps de planche de base (21) et dudit corps de planche de connexion (41).

7. Dispositif porte-gage selon l'une quelconque des revendications 1 à 6, dans lequel ledit corps de planche de base (21) présente en outre une rainure de stockage (214), et ladite unité de planche de base (2) comporte en outre une plaque de couverture de stockage (24) qui est disposée sur ledit corps de planche de base (21) et qui recouvre au moins partiellement ladite rainure de stockage (214).
